# EUROPEAN PATENT APPLICATION

(11) **EP 0 553 565 A2**
(43) Date of publication of application: **04.08.1993**
(21) Application number: 92311730.3
(22) Date of filing: 23.12.1992
(51) Int. Cl.: F16C 11/08, F16C 11/06, F16C 27/06

(54) **Spherical bearing**

(30) Priority: 31.01.1992 GB 9202066
(71) Applicant: ROSE BEARINGS LIMITED, Lincoln LN6 3RA (GB)
(72) Inventor: Bennett, Christopher, Newark, Nottinghamshire NG24 4PN (GB)
(74) Representative: Jones, William

(57) **Abstract**

A spherical bearing has a resilient anti vibration (3) sleeve mounted around its housing (2) so as to combine vibration absorption properties with a full malalignment capability. The bearing may be incorporated in or formed as a rod end bearing.

## Description

This invention relates to a spherical bearing, for example of the type used for mounting anti-roll bars, radial arms and torsion bars in road and rail vehicles, and of the rod end type used, for example for steering joints for vehicles.

A known type of spherical bearing has a hollow cylindrical body having a spherical bearing surface therearound and a portion of a ball mounted therein with at least one connecting eye extending therefrom. In order to provide some damping of vibration, it has been proposed to provide between the bore and the cylindrical body a layer of a resilient material such as a rubber material bonded to each surface. This type of bearing has been found to be acceptable where only a small degree of malalignment is to be taken up by the spherical bearing, since the malalignment capability depends upon deformation of the rubber and will be limited by the cross section and the hardness of the rubber. If the distortion induced is excessive, the rubber can shear, and, even if shearing does not occur, the ability of the bearing to absorb vibration will be reduced. It has been found that, under some conditions, the life of such bearings is significantly shorter than that of conventional spherical bearings.

The present invention provides a spherical bearing for linking two bodies together, the bearing comprising first and second members having co-operating spherical bearing surfaces, the first member also having a cylindrical surface through which it may be secured to one of the bodies, the cylindrical surface being provided with a resilient sleeve therearound.

Preferably, the first member is a cylindrical housing, and the sleeve surrounds the housing. The second member may have a bore therethrough.

In an alternative embodiment, the first member has a bore therethrough providing said cylindrical surface, and the sleeve is located within the bore.

The sleeve may comprise inner and outer coaxial metal tubes with resilient material filling the space therebetween. The resilient material is suitably a rubber material, preferably a synthetic rubber material. The sleeve may be attached to the cylindrical surface by deformation of one of the metal tubes.

One aspect of the invention provides a rod end bearing having a rod end housing with a cylindrical opening therethrough and a spherical bearing assembly mounted in the opening with a resilient sleeve between the assembly and the housing. The spherical bearing assembly preferably comprises a central ball member having a cylindrical bore therethrough.

In an alternative embodiment of the rod end bearing, the spherical bearing assembly is formed directly in the rod end housing, the ball member having a cylindrical bore therethrough the bore containing the resilient sleeve.

The invention also provides a method of making a spherical bearing, comprising forming a sleeve consisting of a layer of a resilient material between two coaxial metal tubes, and securing the sleeve to a cylindrical surface of the bearing.

The spherical bearing of the present invention permits a malalignment capability equal to that of conventional spherical bearings and rod end bearings, coupled with a high degree of vibration absorption. Since the material of the resilient sleeve is not subject to distortion when the bearing adjusts under conditions of malalignment, its life is greatly extended in comparison with those bearings in which the resilient material is directly bonded to both surfaces of the bearing. The manufacture of the bearing invention is straightforward, in many cases only involving an addition to existing bearing structures.

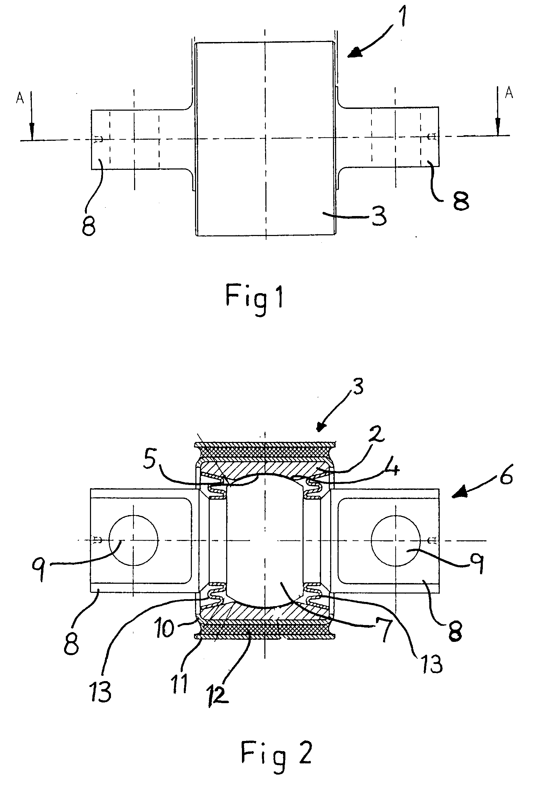

Reference is made to the drawings, in which:
Figure 1 is a plan view of a spherical bearing in accordance with one embodiment of the invention;
Figure 2 is a section on line AA in Figure 1;
Figure 3 is a front elevation of a rod end spherical bearing in accordance with another embodiment of the invention; and
Figure 4 is a section on line BB in Figure 3
Referring first to Figures 1 and 2, the spherical bearing comprises a cylindrical first member 1 consisting of a cylindrical housing 2 having a resilient sleeve 3 secured to its external surface. Internally, the housing 2 has a circumferential spherical bearing surface 4 which may be lined with a lubricating liner 5, for example of PTFE (poly(tetrafluoroethylene)). The second member 6 comprises a ball section 7 rotatably mounted in the housing 2 with the liner 5 therebetween. Extending from each side of the ball section 7 is a mounting flange 8 having a hole 9 therethrough by which the bearing may be bolted to a mounting.

The resilient sleeve 3 comprises coaxial metal tube sections 10 and 11 with the annular space therebetween filled with a rubber material 12 which is bonded to each of the tubes 10 and 11. The inner tube section 10 is deformed at its outer edges around the body of the housing 2 to secure the sleeve thereto.

The sleeve is suitably formed by the known process of holding the tubes 10 and 11 in their correct relative positions and injecting the material in liquid form between them. The liquid rubber is then caused to cure so as to become solid and, via bonding agents, to bond to the tubes 10 and 11. The completed sleeve can then be assembled onto the reminder of the spherical bearing.

Rubber seals 13 are bonded between the housing 2 and the second member 6 to protect the bearing surfaces from damage by the ingress of dirt.

In use, the mounting flanges 8 are suitably bolted to mountings, while a mounting member is attached around the sleeve 3 to secure this portion of the bearing to the second of the two bodies to be linked together. For example, in a railway bogey, the flanges 8 might suitably be attached to the main frame of the bogey, while traction components, for example, might be suspended from mounts around the exterior of the sleeve 3. Thus, a full range of relative movement between the two bodies is permitted but vibration transmission is greatly reduced.

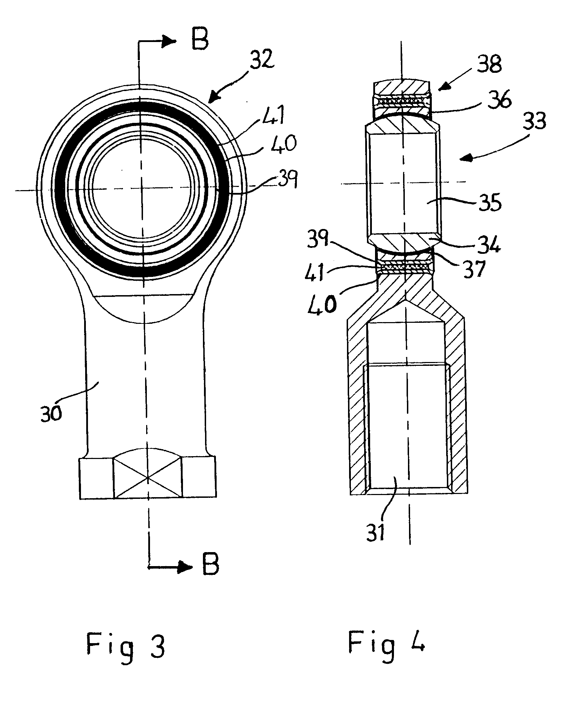

Referring now to Figures 3 and 4, the rod end bearing comprises a housing 30 having a threaded bore 31 at one end for connection to a correspondingly threaded rod, and a head portion 32 which is initially formed with a plain cylindrical bore therethrough provided with a slight chamfer at each side thereof. A spherical bearing assembly 33 is then fitted into the ball to complete the rod end bearing. The spherical bearing assembly 33 consists of a central ball member 34 which consists of a section of a sphere having a cylindrical bore 35 therethrough. The ball member 34 is located in an annular housing member 36 whose inner surface is correspondingly spherically shaped and is lined with a lubricating film 37. The housing 36 has around its outer surface a resilient sleeve or bush 38 consisting of coaxial metal tubes 39 and 40 with a layer of a rubber material 41 therebetween. The bush 38 is attached to the housing 36 by deforming the inner tube 39 into conformity with the chamfered outer surface of the housing 36, and the resultant assembly 33 is then secured in the opening in the head 32 of the rod end housing by deforming the outer tube 40 over the chamfered ends of the opening. It will be seen, therefore, that in some respects the manufacture of the rod end housing is substantially simplified, since precision machining of its head end is no longer required.

An additional benefit obtained from the spherical bearing in accordance with the invention is that the use of the resilient anti vibration sleeve will significantly extend the life of the lubricating liner, and hence the life of the bearing itself.

## Claims

1. A spherical bearing for linking two bodies together, the bearing comprising (2,36) first and second (6,34) members having co-operating spherical bearing surfaces, the first member (2,36) also having a cylindrical surface through which it may be secured to one of the bodies, characterised in that the cylindrical surface being provided with a resilient sleeve therearound.

2. A spherical bearing according to Claim 1, wherein the first member is a cylindrical housing (2,36), and the sleeve (3,38) surrounds the housing.

3. A spherical bearing according to Claim 1 or 2, wherein the second member (34) has a bore (35) therethrough.

4. A spherical bearing according to any preceding claim, wherein the sleeve comprises inner (10,39) and outer (11,40) coaxial metal tubes with resilient material (12,41) filling the space therebetween.

5. A spherical bearing according to Claim 4, wherein the resilient material (12,41) is rubber.

6. A spherical bearing according to Claim 4 or 5, in which attachment of the sleeve to the cylindrical surface is by deformation of one (10,39) of the metal tubes into conformity with said member (2,36).

7. A rod end bearing having a rod end housing (30) with a cylindrical opening therethrough, and a spherical bearing (33) according to any preceding claim mounted in the opening with the resilient sleeve (38) between the bearing (33) and the housing (30).

8. A rod end bearing according to Claim 7, wherein the spherical bearing comprises a central ball member (34) with cylindrical bore (35) therethrough.

9. A method of making a spherical bearing, comprising forming a sleeve 3,38) consisting of a layer (12,41) of a resilient material between two coaxial metal tubes (10,11 or 39,40), and securing the sleeve to a cylindrical surface of the bearing.
